# FASCICULE DE BREVET EUROPEEN

(11) **EP 0 736 247 B1**
(45) Date de publication et mention de la délivrance du brevet: **08.03.2000**
(21) Numéro de dépôt: 96400715.7
(22) Date de dépôt: 03.04.1996
(51) Int. Cl.: A01J 25/16

(54) **Claies pour fabrication de fromage, procédé de fabrication de fromage mettant en oeuvre de telles claies et dispositif de retournement d'une pile de telles claies**
Horde zur Herstellung von Käse, Verfahren zur Herstellung von Käsen mit Verwendung von solchen Horden und Wendevorrichtung für einen Stapel von solchen Horden
Trays for producing cheese, process for producing cheese using such trays and device for turning a pile of such trays

(30) Priorité: 04.04.1995 FR 9503955
(43) Date de publication de la demande: 09.10.1996
(73) Titulaire: BONGRAIN S.A., 78280 Guyancourt (FR)
(72) Inventeur: Laurent, Serge, 52000 Chaumont (FR)
(74) Mandataire: Hurwic, Aleksander

(56) Documents cités:
- DE-U- 7 015 037
- FR-A- 2 045 296
- FR-A- 2 258 122
- FR-A- 2 273 469
- FR-A- 2 426 415

## Description

La présente invention se rapporte principalement à des claies pour fabrication de fromage, à un procédé de fabrication de fromage mettant en oeuvre de telles claies et dispositif de retournement d'une pile de telles claies.

La fabrication de fromage notamment de fromage à pâte molle nécessite de nombreux traitements physiques ou chimiques avec manutention et/ou transport sur de courtes distances des caillés ou des fromages en cours de fabrication. Le maintien des fromages est indispensable au bon déroulement de certaines opérations de transport local et/ou de manutention, notamment lors de salage et du retournement en cours d'affinage. De manière connue, on sale les fromages par immersion dans un bain de saumure des claies portant des moules contenant les fromages.

D'une part, la présence du moule diminue la surface d'absorption du sel par chaque fromage. D'autre part, le sel se dépose sur la paroi du moule, ce qui augmente inutilement la consommation de sel qui de plus doit être éliminée par un lavage plus poussé du moule. En outre, les rejets de l'eau salée de lavage du moule posent des problèmes de pollution.

D'autre part, FR-A-2 426 415 décrit la mise en oeuvre d'un moule ou d'un ensemble de moules gerbables muni d'un double fond susceptible d'être déplacé pour immobiliser le fromage en cours de retournement. Ce dispositif permet de s'affranchir de l'utilisation d'une pile de claies à fromage mais introduit les inconvénients précités inhérents à la mise en oeuvre de moules.

Il est habituel de déposer des fromages à pâte molle en cours de fabrication sur des claies gerbables comportant des pieds formant espaceurs dont la hauteur est supérieure à l'épaisseur des fromages. Une pile de claies, emboîtées sur un support inférieur appelé pieds de base, chacune étant garnie de fromages, est amenée dans une cave pour un affichage, par exemple d'une durée de douze jours ou plus. Malheureusement, lors du transport de la pile vers la cave, les fromages se déplacent sur les claies avec risque de contact entre les fromages voisins. Une fois arrivés dans la cave d'affinage, les fromages sont repositionnés manuellement pour éviter un défaut d'aspect inacceptable appelé marquage de talon résultant du contact lors de l'affinage entre les fromages voisins. Pendant la période d'affinage, il faut procéder à une opération dite de retournement. Il faut prendre une claie après l'autre de la pile en posant une claie à l'envers sur les fromages et procéder manuellement au retournement.
Cette opération est répétée autant de fois qu'il y a de claies dans une pile et multipliée par le nombre de piles à retourner. Il est courant de devoir effectuer plusieurs retournements par cycle pour garantir la qualité optimale des fromages en cours d'affinage. Les opérations de retournement effectuées au fur et à mesure sur toute la hauteur de la pile dans des conditions défavorables d'éclairage de température et d'humidité sont extrêmement pénibles pour le personnel et très coûteuses pour le fabricant de fromage.

C'est par conséquent un but de la présente invention d'offrir des moyens de retournement automatique des fromages, notamment en cours d'affinage.

C'est également un but de la présente invention d'offrir des moyens de maintien des fromages lors du transport vers les caves d'affinage.

C'est aussi un but de la présente invention d'offrir des moyens de maintien des fromages démoulés lors du salage.

C'est également un but de la présente invention d'offrir des moyens de maintien permettant de faciliter et de minimiser les opérations de manutention lors de l'affinage des produits.

C'est aussi un but de la présente invention d'offrir de tels moyens présentant un faible encombrement.

C'est également un but de la présente invention d'offrir de tels moyens présentant un faible coût de revient.

Il est bien entendu que ces buts doivent être atteints sans compromettre la qualité des fromages fabriqués.

Ces buts sont atteints selon l'invention par une claie perfectionnée comportant des moyens pour faire varier la hauteur entre les grilles des deux claies consécutives dans une pile de claies. Une première hauteur, par exemple de 80 mm , supérieure à la hauteur des fromages en cours d'affinage, permet un affinage analogue à l'affinage de type connu. Une deuxième hauteur est légèrement inférieure ou égale à l'épaisseur des fromages qui sont maintenus entre les plateaux ou les grilles des claies consécutives permettant le transport local, les manutentions, les retournements et l'immersion, notamment dans le saumure, des fromages démoulés. Après ces opérations, notamment après chaque retournement, on peut, si cela est avantageux, augmenter la hauteur entre les grilles des claies, ce qui améliore l'aération des produits.

L'invention a principalement pour objet une claie gerbable pour la fabrication de fromages comportant une grille et des pieds formant espaceurs ménageant une hauteur h1 entre les grilles de deux claies consécutives d'une pile de claies, caractérisée en ce qu'elle comporte des moyens pour faire varier dans les deux sens la hauteur h entre les grilles de deux claies consécutives entre une première valeur h1 supérieure à l'épaisseur des fromages favorisant leur affinage et une deuxième valeur h2 légèrement inférieure ou égale à l'épaisseur des fromages pour en assurer le maintien durant le transport, les manutentions et/ou le salage.

L'invention a également pour objet une claie caractérisée en ce que les moyens pour faire varier la hauteur h entre les grilles des deux claies consécutives comportent des pieds montés à rotation.

L'invention a également pour objet une claie caractérisée en ce qu'elle comporte quatre pieds disposés aux quatre coins d'une grille rectangulaire et en ce que les axes de rotation des pieds sont parallèles au plan de la grille.

L'invention a également pour objet une claie caractérisée en ce qu'elle comporte des moyens de verrouillage des pieds dans deux positions orthogonales, une première position érigée correspondant à la condition aérée de la pile de claies et une seconde position à plat, rentrée ou escamotée correspondant à une condition compacte de la pile de claies.

L'invention a également pour objet une claie caractérisée en ce qu'elle comporte un cadre et des pieds en matière plastique, notamment en polypropylène injecté, et une grille et des axes de rotation en acier inoxydable.

L'invention a également pour objet une claie caractérisée en ce que les moyens pour faire varier la hauteur h entre les grilles des deux claies consécutives comportent des pieds formant sensiblement des parallélépipèdes rectangles terminés par un premier piton, en ce que la base de chaque pied comporte un second piton orthogonal audit premier piton, et en ce que la claie, notamment un cadre, est munie de cuvettes de réception desdits pitons.

L'invention a également pour objet une claie caractérisée en ce qu'elle comporte une grille rectangulaire portant à chacun de ses quatre coins un pied comportant une première pointe selon un premier axe et une seconde pointe selon un second axe orthogonal audit premier axe, et en ce qu'à l'opposé desdites pointes sont ménagées des cavités de formes complémentaires.

L'invention a également pour objet une claie caractérisée en ce qu'elle comporte des pieds permettant la formation d'une pile de claies superposées avec une distance h entre grilles des deux claies consécutives inférieure ou égale à l'épaisseur des fromages correspondant à la condition compacte et en ce qu'elle comporte en outre des espaceurs montés à rotation pour recevoir, dans la condition aérée, lesdits pieds de la claie consécutive et augmenter la distance entre les grilles des deux claies consécutives.

L'invention a également pour objet une claie caractérisée en ce qu'elle comporte une grille en fil d'acier inoxydable comprenant un cadre rectangulaire portant sur chacune de ses faces des fils supportant les fromages.

L'invention a également pour objet un dispositif de retournement d'une pile de claies, caractérisé en ce qu'il comporte :
- des moyens de saisie d'une pile de claies en condition aérée garnie de fromages, la pile étant recouverte par une claie vide ;
- des moyens pour faire passer la pile des claies en condition compacte dans laquelle les grilles des deux claies consécutives assurent le maintien des fromages ;
- des moyens pour retourner la pile de claies dans la condition compacte ;
- des moyens pour faire passer les claies dans la condition aérée ;
- des moyens pour déposer la pile de claies retournées sur son pied de bases.

L'invention a également pour objet un dispositif caractérisé en ce que les moyens de retournement comportent un anneau tournant monté sur des rouleaux motorisés et en ce que les moyens de saisie comportent deux vérins disposés en vis-à-vis et diamétralement opposés sur l'anneau.

L'invention a également pour objet un procédé de fabrication de fromage comportant une étape d'affinage des fromages disposés sur des claies avec cycle de retournement des fromages, caractérisé en ce que les fromages sont disposés sur des claies.

L'invention a également pour objet un procédé caractérisé en ce qu'on met en oeuvre le dispositif de retournement pour assurer le retournement des piles de claies.

L'invention sera mieux comprise au moyen de la description ci-après et des figures annexées données comme des exemples non limitatifs et sur lesquels :
- la figure 1 est une vue partielle d'un détail d'une pile de claies de type connu ;
- la figure 2 est une vue de côté partielle d'une pile de l'exemple préféré de réalisation de claies selon la présente invention dans une condition compacte ;
- la figure 3 est une vue partielle de la pile de claies de la figure 2 dans une condition aérée et garnie de fromages ;
- la figure 4 est une vue de côté partielle de la pile de claies de la figure 2 assurant le maintien des fromages ;
- la figure 5 est une vue analogue à la figure 3 mais après un retournement ;
- la figure 6 est une vue partielle de côté d'une deuxième variante de réalisation de claies selon la présente invention, dans une condition aérée ;
- la figure 7 est une vue analogue à la figure 6 mais dans une condition compacte ;
- la figure 8 est une vue de côté partielle d'une troisième variante de réalisation de claies selon la présente invention, dans une condition aérée ;
- la figure 9 est une vue analogue à la figure 8 mais dans une condition compacte ;
- la figure 10A est une vue en plan d'une grille susceptible d'être mise en oeuvre dans les claies selon la présente invention ;
- la figure 10B est une vue en coupe selon B-B de la grille de la figure 10a ;
- la figure 11 est une vue de côté d'une pile de claies munie de fromages en cours de transport sur un chariot vers une cave d'affinage ;
- la figure 12 est une vue de face d'un retourneur selon la présente invention lors de la préhension d'une pile de claies ;
- la figure 13 est une vue analogue lors du maintien de la pile de claies dans une condition compacte ;
- la figure 14 est une vue analogue après retournement de la pile et déploiement des claies selon l'invention.

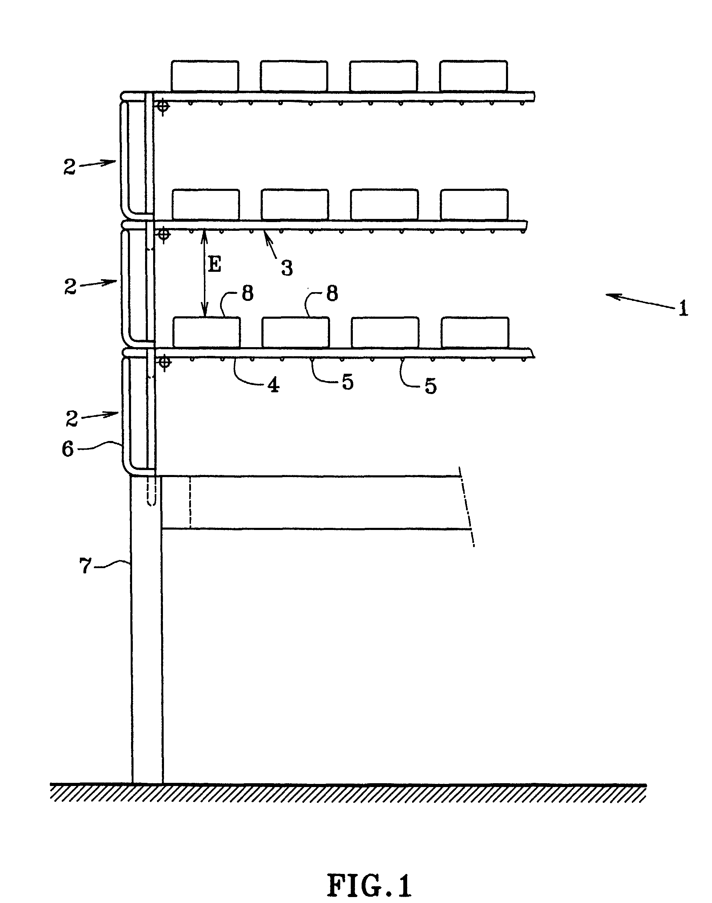

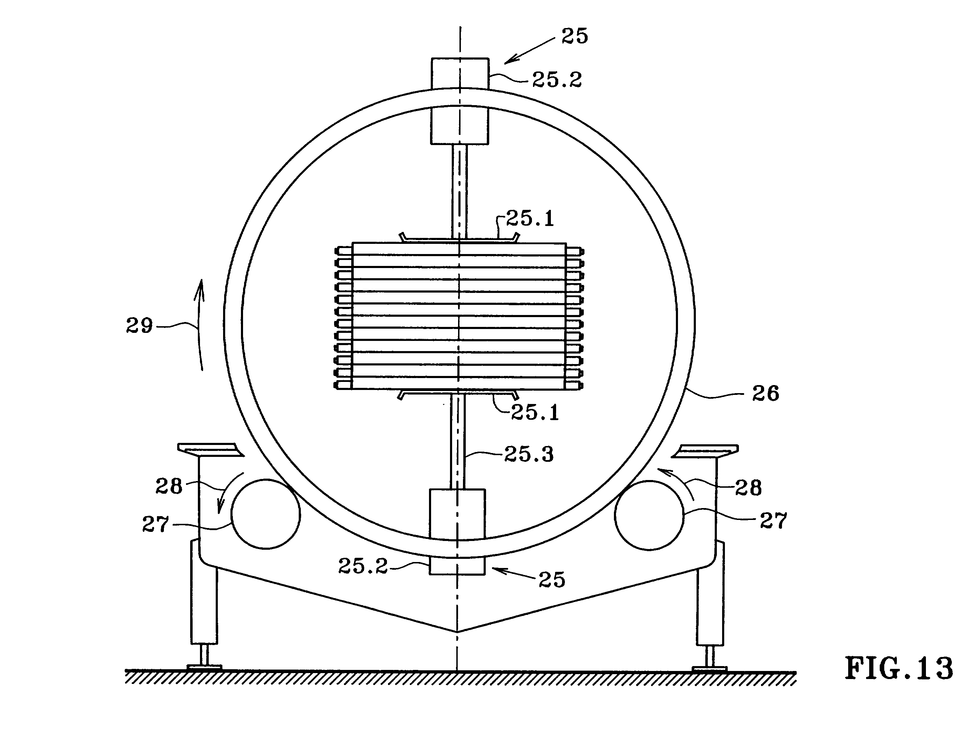

Sur les figures 1 à 14, on a utilisé les mêmes références pour désigner les mêmes éléments.

Sur la figure 1, on peut voir une pile 1 de claies rectangulaires 2 de type connu en fil d'acier inoxydable. Chaque claie 2 comporte une grille 3 composée d'un cadre 4 en fil de 6 mm de diamètre reliée par des fils 5 parallèles ayant 2,5 mm de diamètre. Des pieds 6 disposés aux quatre coins de la grille 3 permettent de gerber les claies pour former une pile aménageant un espace de 80 mm entre grilles 3 de claies consécutives. La première claie 2 repose sur un pied de base 7. Des fromages 8 sont régulièrement disposés sur les grilles 3 des claies 2 où ils sont maintenus uniquement par leur poids. Lors du transport d'une pile de claies vers la cave d'affinage, l'immobilisation horizontale (dans le plan des grilles 3) des fromages 8 n'est pas garantie. Il en résulte un risque de contact entre les talons des fromages 8 voisins. D'autre part, à cause de l'espace E entre la face supérieure des fromages 8 et la grille 3 immédiatement supérieure, le retournement direct d'une pile 1 de claies 2 de type connu aurait des conséquences catastrophiques.

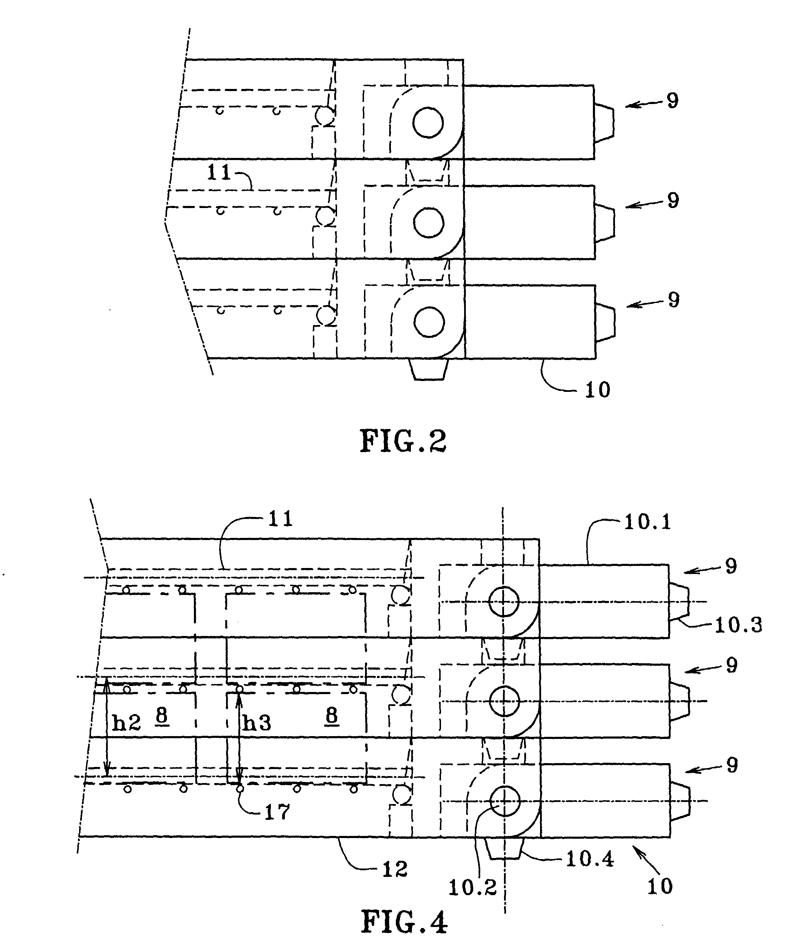

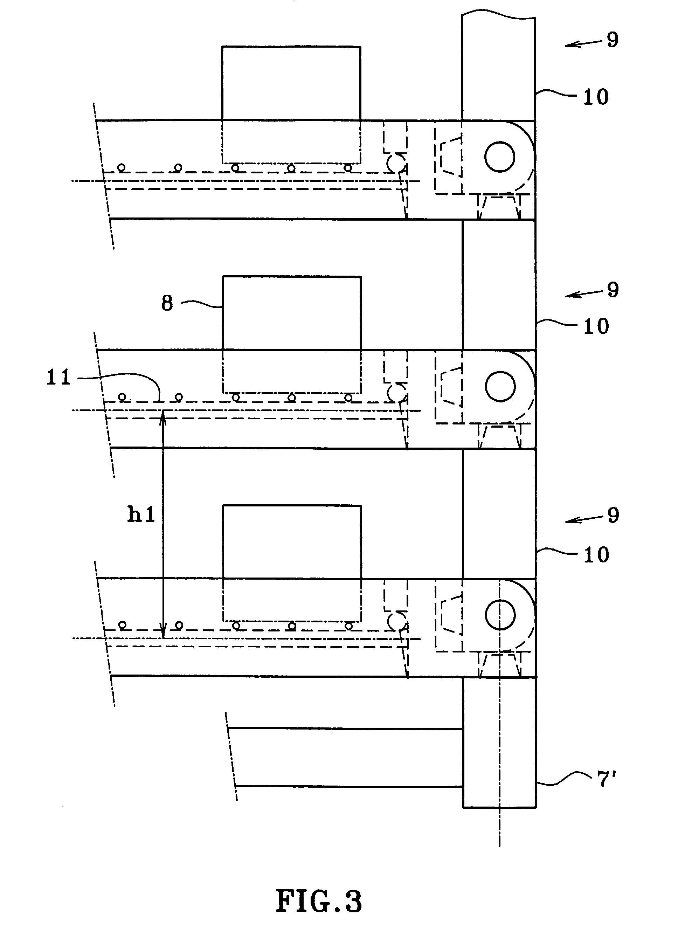

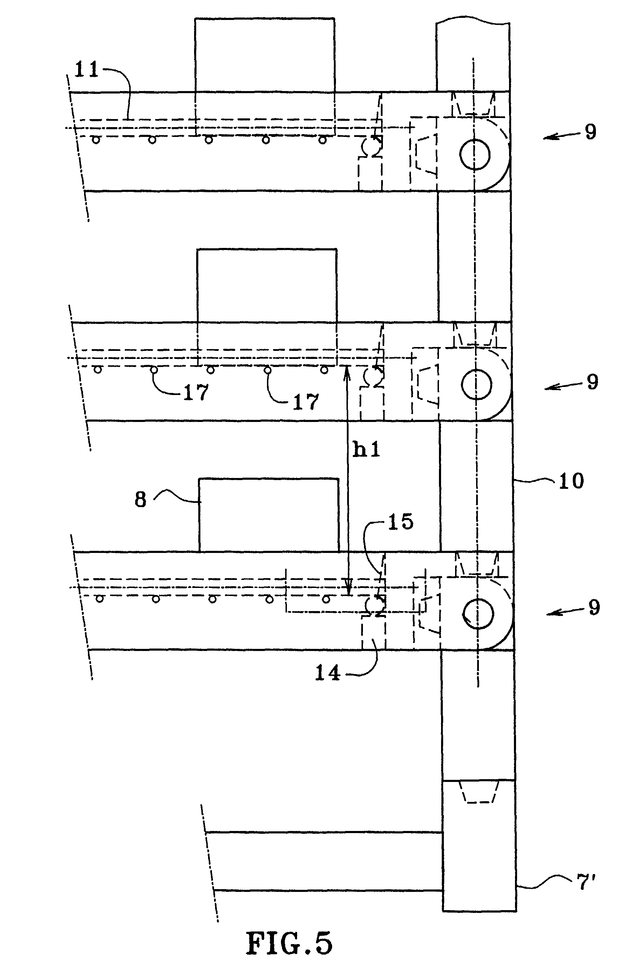

Sur les figures 2 à 5, on peut voir un premier exemple de claies 9 selon l'invention comportant des moyens 10 pour faire varier la hauteur h séparant les grilles 11 des deux claies consécutives d'une pile. Dans une première condition aérée, illustrée sur les figures 3 et 5, la hauteur h1 entre les grilles 11 des deux claies consécutives d'une pile correspond à celle des claies de type connu, de manière à favoriser l'affinage et notamment l'aération des fromages 8. Dans une deuxième condition compacte illustrée sur les figures 2 et 4, la hauteur h2 séparant les grilles 11 de deux claies 9 consécutives d'une pile est légèrement inférieure ou égale à l'épaisseur d'un fromage 8.

Avantageusement, les moyens 10 pour faire varier la hauteur h séparant les grilles 11 des claies 9 consécutives comportent des pieds 10.1 susceptibles d'être érigées (dans la condition aérée) ou, au contraire, être mises à plat, escamotées ou rétractées (dans la condition compacte). Dans la variante préférée de l'invention, les pieds 10.1 sont repliables. Chaque pied 10.1 est monté à rotation autour d'un axe 10.2 parallèle au plan d'un cadre 12 rectangulaire de la claie 9. Il est à noter que les deux positions des pieds 10.1 correspondant aux conditions aérées ou compactes des claies 9 selon l'invention sont suffisamment stables pour assurer le maintien d'une pile de claies 9. Les pieds 10.1 peuvent, par exemple, être munis de moyens de verrouillage dans la position érigée et/ou dans la position à plat. Dans l'exemple illustré, les axes 10.2 des quatre piles 10.1 situées aux quatre coins du cadre 12 sont parallèles aux petits côtés dudit cadre. La rotation des pieds est avantageusement limitée à 90° avec point dur de verrouillage à proximité immédiate de la position érigée. La stabilité de la pile de claies dans la condition aérée est améliorée par des pitons 10.3 situés à l'extrémité de chaque pied 10.1 pénétrant en position érigée dans des cuvettes de forme complémentaire pratiquées à chaque coin du cadre 12. Dans la condition aérée, les cuvettes reçoivent les pitons 10.2 des pieds 10 de la claie consécutive. De même, des pitons 10.4 peuvent être disposés à la base des pieds 10 orthogonalement aux pitons 10.3. Dans la condition compacte, les cuvettes reçoivent les pitons 10.4 des pieds de la claie consécutive.

Sans que cela ne présente aucun caractère limitatif, dans l'exemple illustré, les pieds 10.1 se replient vers l'extérieur du cadre 12.

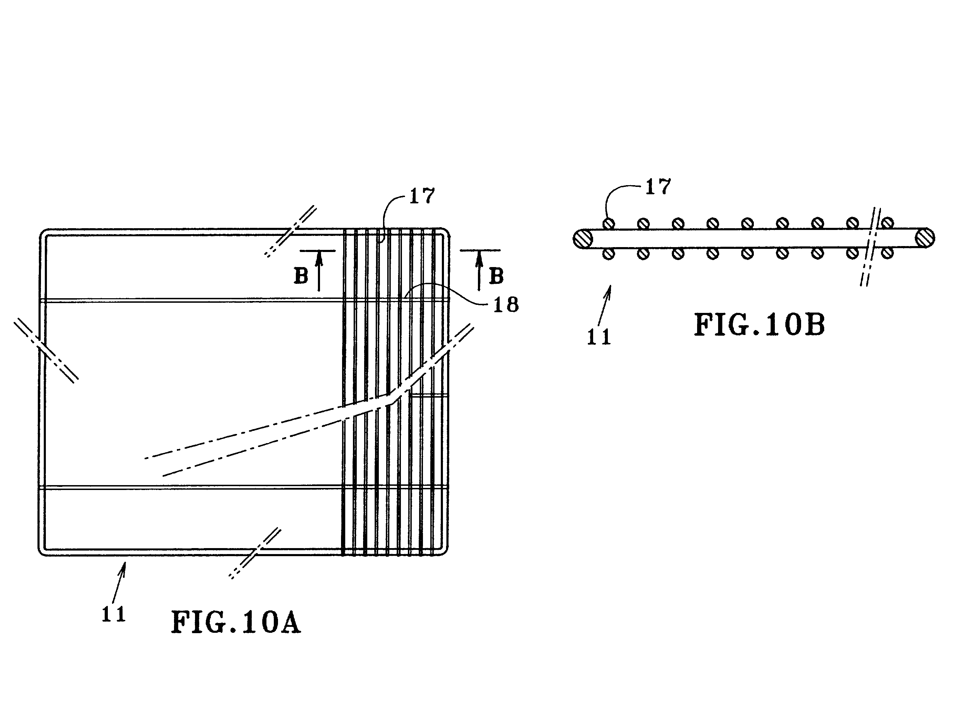

Les claies 9 selon l'invention sont réalisées en des matériaux compatibles avec les exigences d'hygiène de l'industrie alimentaire. Dans l'exemple de réalisation des figures 2 à 5, la claie 9 comporte un cadre rectangulaire 12 et des pieds 10.1 formant parallélépipède rectangle en polypropylène injecté. La grille 11 et les axes 10.2 sont avantageusement réalisés en acier inoxydable. Avantageusement, les axes 10.2 sont amovibles avec un outil de manière à permettre, si cela est nécessaire, le remplacement individuel d'un pied 10.1 abîmé ou cassé ou pour remplacer les pieds 10.1 par des pieds ayant une hauteur différente. La grille 11 est avantageusement encliquetée, par exemple le long du petit côté du cadre rectangulaire 12 entre une butée 14 et des rampes 15. On peut mettre en oeuvre soit des grilles 11 dont un cadre 16 porte sur une seule de ses faces des fils 17 disposés par exemple parallèlement aux petits côtés du rectangle, soit, comme illustré sur la figure 10, des grilles 11 symétriques par rapport au plan du cadre. Cette grille comporte sur chaque face du cadre 16 des fils 17 disposés en vis-à-vis. Avantageusement, des raidisseurs 18 sont disposés dans le plan du cadre 16, par exemple parallèlement aux grands côtés du rectangle. Les fils 16, 17 et 18 en acier inoxydable sont solidarisés par brassage ou soudure. Dans l'exemple préféré de réalisation, les fils du cadre 16 ont 6 mm de diamètre, les fils 17 ont 2,5 mm de diamètre et les raidisseurs 18 ont 3 mm de diamètre. Les cadres 12 ont par exemple une épaisseur de 35 mm, la hauteur des pieds 10.1 sans les pitons 10.3 est égale à 45 mm.

Sur la figure 2, on peut voir une pile de claies 9 selon l'invention dans une position compacte destinée notamment au stockage.

Sur la figure 3, on peut voir une pile de claies 9 selon l'invention dans une condition aérée, les pieds 10.1 dirigés vers le haut. La hauteur h1 entre grilles consécutives 11 permet un excellent affinage des fromages 8 ayant, par exemple, une épaisseur de 40 mm.

Sur la figure 4, on peut voir une pile de claies 9 selon l'invention dans une condition compacte, les pieds 10.1 étant mis à plat, de manière à assurer le maintien des fromages 8. La hauteur h2 entre deux grilles consécutives est égale à 35 mm. Toutefois, la distance h3, entre les faces opposées des grilles 11 prenant appui sur les faces en regard des fromages comprimés en tenant donc compte de l'épaisseur des fils 17, est par exemple égale à 33 mm.

Sur la figure 5, on peut voir la pile de claies des figures 3 et 4 après retournement, dans une condition aérée, les pieds 10.1 étant dirigés vers le bas. Il est à noter que les fromages 8 ont repris leur épaisseur dans une condition non contrainte égale à 40 mm.

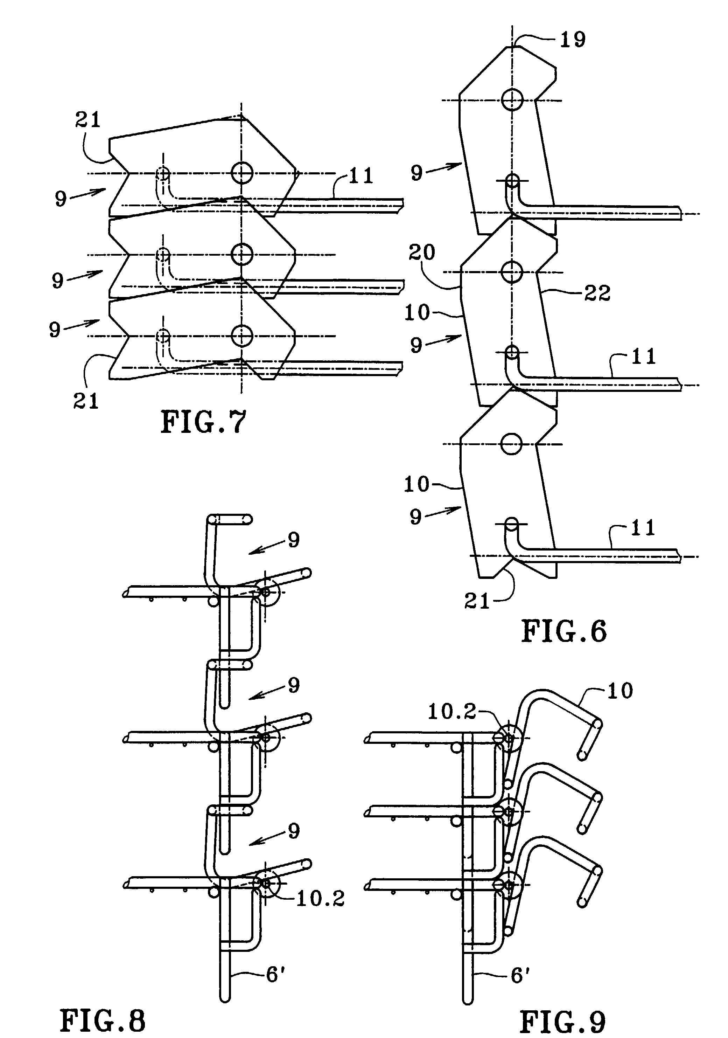

Sur les figure 6 et 7, on peut voir une claie 9 selon la présente invention comportant une grille rectangulaire 11 portant à chacun de ses quatre coins une pièce allongée 10 formant un pied et comprenant une première pointe 19 et une seconde pointe 20 d'axes orthogonaux. A l'opposé des pointes 19 et 20 sont ménagées les cavités respectivement 21 et 22 de formes complémentaires ou sensiblement complémentaires, de réception de la pointe de la pièce correspondante de la claie consécutive. Dans l'exemple avantageux illustré, chaque pointe est coupée à son extrémité et se termine donc par un méplat. Les pièces 10 sont montées à rotation sur la grille 11. Lors de l'orientation verticale des pointes 19 pénétrant dans les cavités 21, les claies 9, comme illustré sur la figure 6, sont dans la condition aérée. Au contraire, lorsque, comme illustré sur la figure 7, les pointes 20 sont orientées verticalement et pénètrent dans les cavités 22, les claies 9 sont dans la condition compacte. Dans ce cas, la distance entre les faces en vis-à-vis des grilles 11 des deux claies consécutives est par exemple égale à la hauteur h2 des claies des figures 2 à 5 ou à l'épaisseur des fromages moins 3 mm.

Sans que cela ne présente aucun caractère limitatif dans la condition illustrée sur la figure 7, les pièces 10 sont repliées vers l'intérieur des claies 9.

Les pièces allongées 10 des figures 6 et 7 sont avantageusement réalisées en matière plastique, notamment en polypropylène injecté.

Sur les figures 8 et 9, on peut voir une pile de claies 9 selon l'invention ayant une structure analogue à celle des claies 1 de la figure 1 de type connu, mais dont la hauteur des pieds 6' correspond à la condition compacte. Chaque claie 9 illustrée sur les figures 8 et 9 est en outre munie, à chacun de ses quatre coins, d'une entretoise 10, de préférence en fil de fer en acier inoxydable, montée à rotation autour d'un axe 10.2. Dans la condition aérée, illustrée sur la figure 8, les entretoises 10 reposent de manière stable sur un des fils de fer de la grille 11 de la claie, et les pieds 6' d'une claie 9 pénètrent dans une ouverture des entretoises 10 de la claie consécutive. Dans la condition compacte illustrée sur la figure 9, les pieds 6' des claies s'emboîtent les uns dans les autres, les entretoises 10 sont repliées par exemple à l'extérieur de chaque claie.

Il est bien entendu que la présente invention n'est pas limitée aux moyens 10 pour faire varier la hauteur h entre les grilles 11 des claies consécutives repliables et/ou montées à rotation autour d'un axe. Sans sortir du cadre de la présente invention, une claie 9 peut être munie des moyens 10 télescopiques, amovibles, déformables, gonflables ou autres.

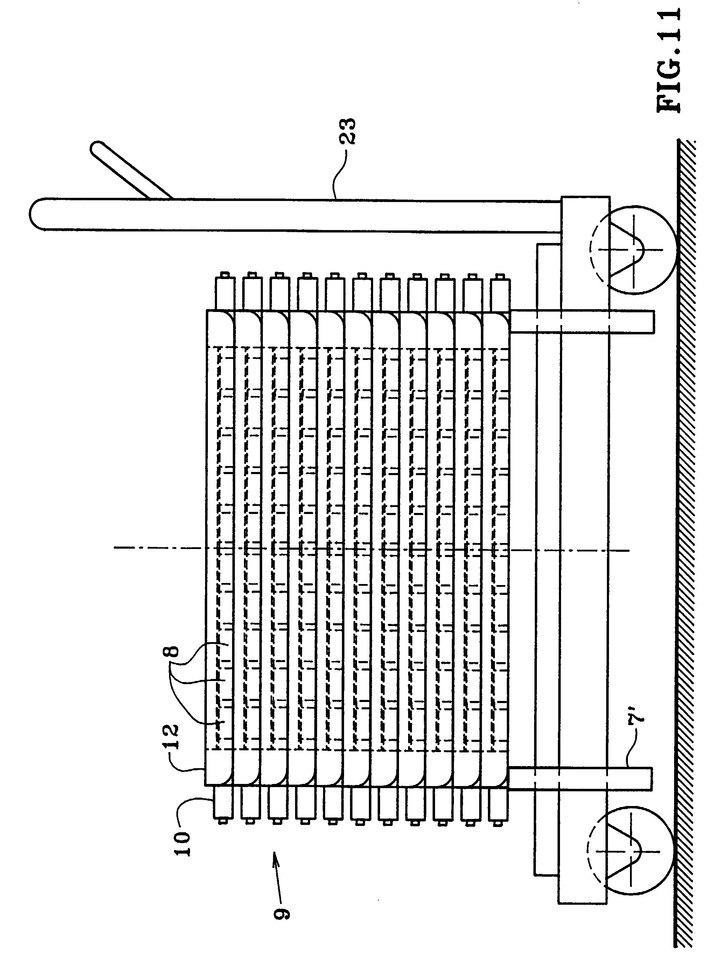

Sur la figure 11, on peut voir une pile de claies 9 des figures 2 à 5 reposant sur un pied de base 7' en cours de transport sur un chariot 23 vers la cave d'affinage. Lors du transport, les fromages 8 sont maintenus en place entre les grilles des claies 9 consécutives et conservent leur répartition régulière initiale. On évite ainsi le risque de chute des fromages 8 en cours de transport et, surtout, le risque de contact entre les talons des fromages 8 voisins.

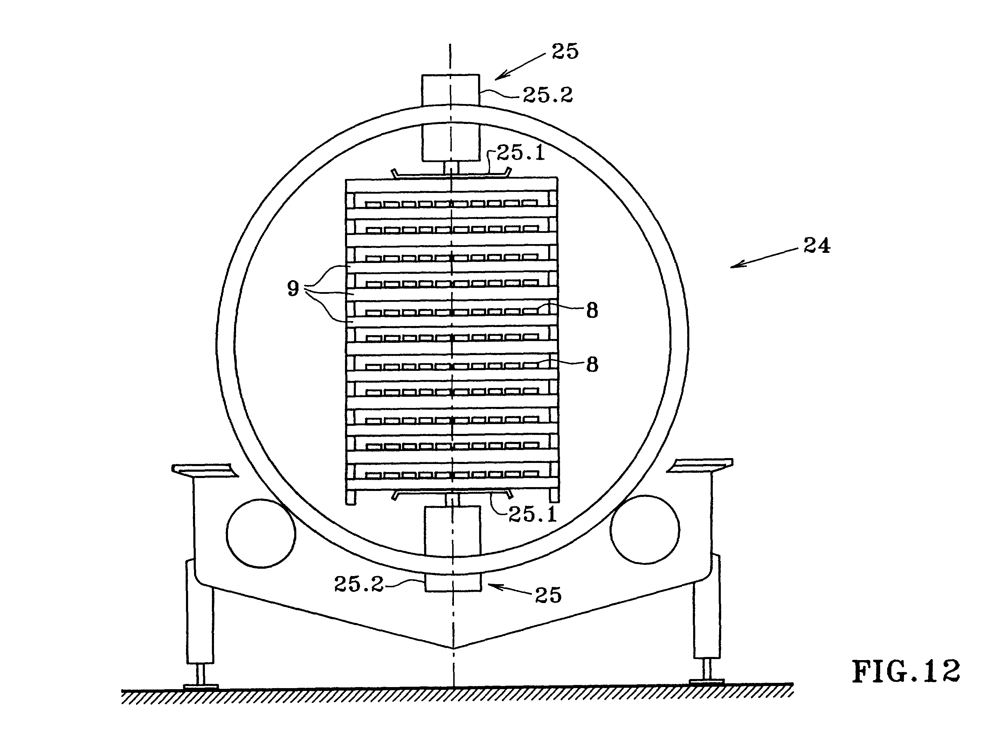

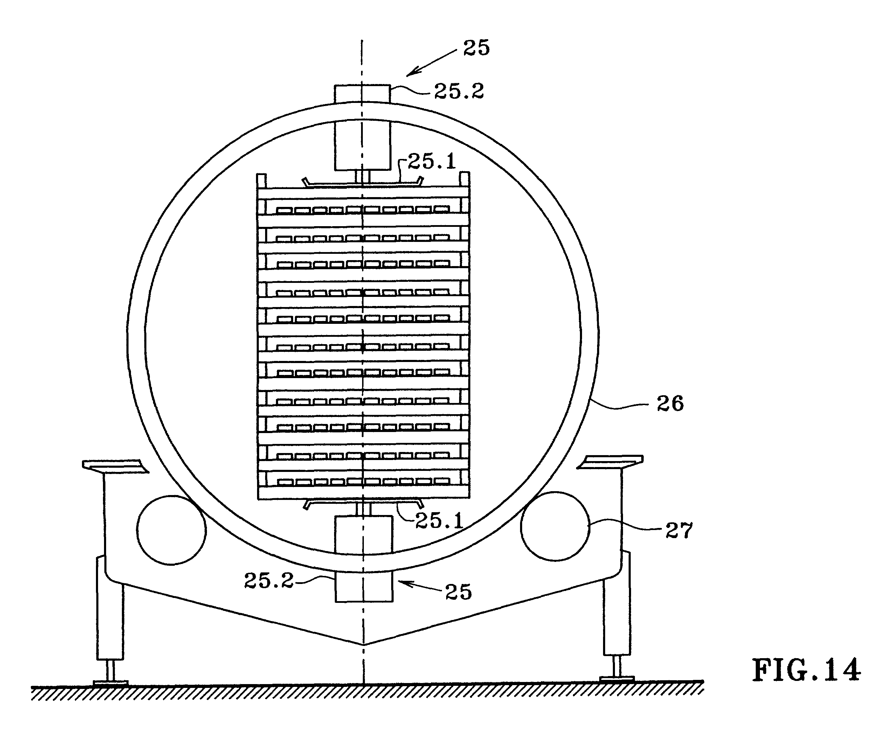

Sur les figures 12 à 14, on peut voir un dispositif 24 de retournement d'une pile de claies 9 selon la présente invention. Le dispositif comporte des moyens 25 de préhension d'une pile de claies 9 portant des fromages 8. Les moyens 25 comportent par exemple deux plateaux 25.1 disposés en vis-à-vis, chacun commandé par un vérin hydraulique 25.2. Il est à noter que la pile de claies 9 doit comporter une claie supérieure ne portant pas de fromages 8 en cours d'affinage. Comme on peut le voir sur la figure 12, la pile des claies 9 est saisie par les moyens 25 dans la condition aérée. Des moyens non représentés assurent le passage en condition compacte avec avancement des tiges 25.3 des vérins 25.2 et rapprochement des plateaux 25.1. Le passage en position compacte peut être effectué successivement pour les diverses claies 9 de la pile, par exemple en partant du haut ou, avantageusement, peut être simultané et synchronisé pour toutes les claies, ce qui permet un retournement plus rapide. Par exemple, des pièces en U commandés par des vérins pneumatiques (non illustrés) assurent tout d'abord un espacement vertical entre claies, puis la rotation des moyens 10 dans le sens désiré. Ensuite, on repose les claies les unes sur les autres, on assure le serrage de la pile avec les vérins 25.2 et on effectue le retournement. Pour passer à la condition aérée après retournement, les pièces en U assurent de nouveau un espacement vertical entre les claies, la rotation des moyens 10 et la dépose des claies les unes sur les autres. Avec le dispositif des figures 12 à 14, on retourne une pile de claies en 5 à 10 s. Le dispositif 25 de saisie de la pile de claies 9 est monté sur des moyens de retournement, par exemple sur un anneau 26 monté sur deux galets motorisés 27. La rotation des galets 27 selon la flèche 28 entraîne la rotation sur 180° de l'anneau 26 selon la flèche 29. Lorsque l'anneau 26, les moyens 25 et donc la pile de claies 9 ont effectué une rotation de 180°, il résulte du passage des moyens 10 en position érigée, tel qu'illustré sur la figure 14, que la pile se trouve de nouveau en condition aérée nécessaire à la poursuite de l'affinage. La pile des claies 9 est déposée sur son pied de base et le dispositif de retournement assure le retournement de la pile suivante.

Il est à noter que la claie 9 initialement inférieure est devenue la claie supérieure de la pile ne portant pas de fromages 8 et destinée uniquement aux opérations de retournement.

Il est à noter que le dispositif de retournement 24 peut retourner des piles de claies notamment des piles de grande hauteur dont le retournement ne pourrait pas être effectué manuellement. Il en résulte la possibilité de constituer des piles de grande hauteur et donc de limiter l'encombrement au sol des fromages en cours d'affinage dans la cave et d'augmenter la production de la cave d'affinage par m² de surface au sol.

Les claies 9 selon la présente invention permettent également d'effectuer le salage des fromages démoulés. Après démoulage, les fromages sont disposés sur la grille d'une claie en position compacte. Lorsque la claie est pleine, on la recouvre avec une nouvelle claie et on répète l'opération jusqu'à l'obtention de la pile de claies désirées. La pile de claies dans la condition compacte assurant l'immobilisation des fromages est immergée dans la piscine de saumure pour en assurer le salage. Le maintien par les claies est suffisant et le salage est amélioré par l'absence des moules. De plus, on évite ainsi le dépôt de sel sur les moules, ce qui en limite la consommation tout en facilitant le nettoyage des moules.

Il est bien entendu que des claies 9, comportant des moyens 10 à hauteur variable ou des moyens 10 interchangeables, de manière à permettre d'adopter une pluralité de distances h1 dans la condition aérée et/ou de distances h2 dans la condition compacte entre grilles des claies successives, ne sortent pas du cadre de la présente invention. De telles claies peuvent, notamment, être mises en oeuvre pour la fabrication successive de divers types de fromages ou pour la fabrication successive de fromages ayant des tailles différentes (portion familiale, portion standard, portion individuelle).

La présente invention s'applique notamment à l'industrie alimentaire.

La présente invention s'applique principalement à l'industrie du fromage.

## Revendications

1. Claie gerbable pour la fabrication de fromages comportant une grille (11) et des pieds (10.1) formant espaceurs ménageant une hauteur h1 entre les grilles (11) de deux claies (9) consécutives d'une pile de claies, caractérisée en ce qu'elle comporte des moyens (10) pour faire varier dans les deux sens la hauteur h entre les grilles de deux claies consécutives entre une première valeur h1 supérieure à l'épaisseur des fromages (8) favorisant leur affinage et une deuxième valeur h2 légèrement inférieure ou égale à l'épaisseur des fromages (8) pour en assurer le maintien durant le transport, les manutentions et/ou le salage.

2. Claie selon la revendication 1, caractérisée en ce que les moyens (10) pour faire varier la hauteur h entre les grilles (11) des deux claies (9) consécutives comportent des pieds (10.1) montés à rotation.

3. Claie selon la revendication 2, caractérisée en ce qu'elle comporte quatre pieds (10.1) disposés aux quatre coins d'une grille (11) rectangulaire et en ce que les axes de rotation (10.2) des pieds (10.1) sont parallèles au plan de la grille.

4. Claie selon la revendication 2 ou 3, caractérisée en ce qu'elle comporte des moyens de verrouillage des pieds (10.1) dans deux positions orthogonales, une première position érigée correspondant à la condition aérée de la pile de claies et une seconde position à plat, rentrée ou escamotée correspondant à une condition compacte de la pile de claies (9).

5. Claie selon l'une quelconque des revendications précédentes, caractérisée en ce qu'elle comporte un cadre (12) et des pieds (10.1) en matière plastique, notamment en polypropylène injecté, et une grille (11) et des axes de rotation (10.2) en acier inoxydable.

6. Claie selon l'une quelconque des revendications précédentes, caractérisée en ce que les moyens (10) pour faire varier la hauteur h entre les grilles (11) des deux claies (9) consécutives comportent des pieds formant sensiblement des parallélépipèdes rectangles terminés par un premier piton (10.3), en ce que la base de chaque pied (10.1) comporte un second piton (10.4) orthogonal audit premier piton (10.3), et en ce que la claie (9), notamment un cadre (12), est munie de cuvettes de réception desdits pitons (10.3, 10.4).

7. Claie selon l'une quelconque des revendications 2 à 5, caractérisée en ce qu'elle comporte une grille rectangulaire (11) portant à chacun de ses quatre coins un pied comportant une première pointe (19) selon un premier axe et une seconde pointe (20) selon un second axe orthogonal audit premier axe, et en ce qu'à l'opposé desdites pointes (19, 20) sont ménagées des cavités (21, 22) de formes complémentaires.

8. Claie selon l'une quelconque des revendications 2 à 5, caractérisée en ce qu'elle comporte des pieds (6') permettant la formation d'une pile de claies (9) superposées avec une distance h entre grilles des deux claies consécutives inférieure ou égale à l'épaisseur des fromages (8) correspondant à la condition compacte et en ce qu'elle comporte en outre des espaceurs (10) montés à rotation pour recevoir, dans la condition aérée, lesdits pieds (6') de la claie consécutive et augmenter la distance entre les grilles (11) des deux claies (9) consécutives.

9. Claie selon l'une quelconque des revendications précédentes, caractérisée en ce qu'elle comporte une grille (11) en fil d'acier inoxydable comprenant un cadre rectangulaire (16) portant sur chacune de ses faces des fils (17) supportant les fromages (8).

10. Dispositif de retournement d'une pile de claies, caractérisé en ce qu'il comporte :
- des moyens (25) de saisie d'une pile de claies (9) selon l'une quelconque des revendications précédentes en condition aérée garnie de fromages (8), la pile étant recouverte par une claie (9) vide ;
- des moyens pour faire passer la pile des claies (9) en condition compacte dans laquelle les grilles (11) des deux claies (11) consécutives assurent le maintien des fromages (8) ;
- des moyens (26) pour retourner la pile de claies (9) dans la condition compacte ;
- des moyens pour faire passer les claies (9) dans la condition aérée ;
- des moyens pour déposer la pile de claies retournées sur son pied de bases.

11. Dispositif selon la revendication 10, caractérisé en ce que les moyens de retournement (26) comportent un anneau tournant monté sur des rouleaux motorisés (27) et en ce que les moyens de saisie (25) comportent deux vérins (25.2) disposés en vis-à-vis et diamétralement opposés sur l'anneau (26).

12. Procédé de fabrication de fromage comportant une étape d'affinage des fromages disposés sur des claies (9) avec cycle de retournement des fromages (8), caractérisé en ce que les fromages sont disposés sur des claies (9) selon l'une quelconque des revendications 1 à 9.

13. Procédé selon la revendication 12, caractérisé en ce qu'on met en oeuvre le dispositif de retournement selon la revendication 10 ou 11 pour assurer le retournement des piles de claies (9).

## Patentansprüche

1. Stapelbare Horde bzw. stapelbares Sieb für die Herstellung von Käse, umfassend ein Gitter bzw. einen Rost (11) und Füße (10.1), die Abstandshalter bilden, welche eine Höhe hl zwischen den Rosten bzw. Gittern (11) von zwei aufeinanderfolgenden Horden bzw. Sieben (9) eines Stapels von Horden bzw. Sieben herbeiführen, dadurch **gekennzeichnet**, daß sie bzw. es Mittel (10) zum Verändern der Höhe h zwischen den Rosten bzw. Gittern von zwei aufeinanderfolgenden Horden bzw. Sieben in beiden Richtungen zwischen einem ersten Wert hl, der größer als die Dicke der Käse (8) ist, so daß er ihre Reifung begünstigt, und einem zweiten Wert h2, der ein wenig kleiner oder gleich der Dicke der Käse (8) ist, um ihren Halt während des Transports, der Handhabungen und/oder der Salzung zu sichern, hat.

2. Horde bzw. Sieb gemäß Anspruch 1, dadurch **gekennzeichnet**, daß die Mittel (10) zum Verändern der Höhe h zwischen den Rosten bzw. Gittern (11) von zwei aufeinanderfolgenden Horden bzw. Sieben (9) Füße (10.1) umfassen oder aus Füßen (10.1) bestehen, die zur Drehung angebracht sind.

3. Horde bzw. Sieb gemäß Anspruch 2, dadurch **gekennzeichnet**, daß sie bzw. es vier Füße (10.1) hat, die an den vier Ecken eines rechteckigen Gitters bzw. Rosts (11) angeordnet sind, und daß die Drehachsen (10.2) der Füße (10.1) parallel zur Ebene des Gitters bzw. Rosts sind.

4. Horde bzw. Sieb gemäß Anspruch 2 oder 3, dadurch **gekennzeichnet**, daß sie bzw. es Mittel für die Verriegelung bzw. Blockierung der Füße (10.1) in zwei orthogonalen Positionen hat, einer ersten aufgerichteten Position, die dem luftigen Zustand des Stapels von Horden bzw. Sieben entspricht, und einer zweiten, flachen, eingefallenen oder eingezogenen Position, die einem kompakten Zustand des Stapels von Horden bzw. Sieben (9) entspricht.

5. Horde bzw. Sieb gemäß irgendeinem der vorhergehenden Ansprüche, dadurch **gekennzeichnet**, daß sie bzw. es einen Rahmen (12) und Füße (10.1) aus Kunststoff, insbesondere injiziertem bzw. spritzgegossenem Polypropylen, und ein Gitter bzw. einen Rost (11) sowie Drehachsen (10.2) aus rostfreiem Stahl hat.

6. Horde bzw. Sieb gemäß irgendeinem der vorhergehenden Ansprüche, dadurch **gekennzeichnet**, daß die Mittel (10) zum Verändern der Höhe h zwischen den Gittern bzw. Rosten (11) von zwei aufeinanderfolgenden Horden bzw. Sieben (9) Füße haben bzw. umfassen, die im wesentlichen rechteckige Parallelepipede bilden, welche in einer ersten Kuppe (10.3) enden, daß die Basis jedes Fußes (10.1) eine zweite Kuppe (10.4) hat bzw. umfaßt, die orthogonal zu der genannten ersten Kuppe (10.3) ist, und daß die Horde bzw. das Sieb (9), insbesondere ein Rahmen (12), mit Mulden für die Aufnahme der genannten Kuppen (10.3, 10.4) versehen ist.

7. Horde bzw. Sieb gemäß irgendeinem der Ansprüche 2 bis 5, dadurch **gekennzeichnet**, daß sie bzw. es ein rechteckiges Gitter bzw. einen rechteckigen Rost (11) hat, der an jeder seiner vier Ecken einen Fuß trägt, welcher eine erste Nase bzw. einen ersten Scheitel (19) gemäß einer ersten Achse und eine zweite Nase bzw. einen zweiten Scheitel (20) gemäß einer zweiten Achse, die orthogonal zu der genannten ersten Achse ist, trägt, und daß auf der Gegenseite bzw. gegenüberliegend von den genannten Nasen bzw. Scheiteln (19, 20) Vertiefungen (21, 22) von komplementärer Form bzw. komplementären Formen angeordnet bzw. ausgespart sind.

8. Horde bzw. Sieb gemäß irgendeinem der Ansprüche 2 bis 5, dadurch **gekennzeichnet**, daß sie bzw. es Füße (6') hat, welche die Bildung eines Stapels von übereinander angeordneten Horden bzw. Sieben (9) mit einem Abstand h zwischen den Rosten bzw. Gittern von zwei aufeinanderfolgenden Horden bzw. Sieben gestatten, der kleiner oder gleich der Dicke der Käse (8) entsprechend dem kompakten Zustand ist, und daß sie bzw. es außerdem Abstandshalter (10) hat, die drehbar angebracht sind, um in dem luftigen Zustand die Füße (6') der folgenden Horde bzw. des folgenden Siebs aufzunehmen und den Abstand zwischen den Gittern bzw. Rosten (11) von zwei aufeinanderfolgenden Horden bzw. Sieben (9) zu erhöhen.

9. Horde bzw. Sieb gemäß irgendeinem der vorhergehenden Ansprüche, dadurch **gekennzeichnet**, daß sie bzw. es ein Gitter bzw. einen Rost (11) aus rostfreiem Stahldraht hat, das bzw. der einen rechteckigen Rahmen (16) umfaßt, welcher auf jeder seiner Seiten Drähte (17) trägt, welche die Käse (8) halten bzw. tragen.

10. Einrichtung zum Umwenden eines Stapels von Horden bzw. Sieben, dadurch **gekennzeichnet**, daß sie folgendes umfaßt:
- Mittel (25) zum Erfassen eines Stapels von Horden bzw. Sieben (9) gemäß irgendeinem der vorhergehenden Ansprüche im luftigen Zustand, die mit Käsen (8) versehen sind, wobei der Stapel mit einer leeren Horde bzw. einem leeren Sieb (9) bedeckt ist;
- Mittel zum Überleiten bzw. -führen des Stapels von Horden bzw. Sieben (9) in den kompakten Zustand, in welchem die Gitter bzw. Roste (11) von zwei aufeinanderfolgenden Horden bzw. Sieben (11) den Halt der Käse (8) sicherstellen;
- Mittel (26) zum Umwenden des Stapels von Horden bzw. Sieben (9) in dem kompakten Zustand;
- Mittel zum Überleiten bzw. -führen der Horden bzw. Siebe (9) in den luftigen Zustand;
- Mittel zum Ablagern des umgewendeten Stapels von Horden bzw. Sieben auf seinen Basisfüßen.

11. Einrichtung gemäß Anspruch 10, dadurch **gekennzeichnet**, daß die Mittel zum Umwenden (26) einen drehbaren Ring umfassen, der auf motorisierten Rollen bzw. Walzen (27) angebracht ist und daß die Mittel zum Erfassen (25) zwei Hubvorrichtungen (25.2) umfassen, die gegenüberliegend und diametral entgegengesetzt auf dem Ring (26) angeordnet sind.

12. Verfahren zur Herstellung von Käse, das eine Phase der Reifung der Käse hat, die auf Horden bzw. Sieben (9) angeordnet sind, mit einem Zyklus des Umwendens der Käse (8), dadurch **gekennzeichnet**, daß die Käse auf Horden bzw. Sieben (9) gemäß irgendeinem der Ansprüche 1 bis 9 angeordnet sind.

13. Verfahren gemäß Anspruch 12, dadurch **gekennzeichnet**, daß die Vorrichtung zum Umwenden gemäß dem Anspruch 10 oder 11 benutzt wird, um das Umwenden von Stapeln von Horden bzw. Sieben (9) sicherzustellen.

## Claims

1. Stackable rack for the production of cheeses, comprising a grating (11) and feet (10.1) forming spacers defining a height h1 between the gratings (11) of two successive racks (9) in a pile of racks, characterised in that it comprises means (10) for varying the height h between the gratings of two successive racks, in both directions, between a first value h1 which is greater than the thickness of the cheeses (8), to favour the maturing of the cheeses, and a second value h2 which is slightly less than or equal to the thickness of the cheeses (8) to ensure that they are held during transportation, handling and/or salting.

2. Rack according to claim 1, characterised in that the means (10) for varying the height h between the gratings (11) of the two successive racks (9) comprise feet (10.1) which are rotatably mounted.

3. Rack according to claim 2, characterised in that it comprises four feet (10.1) arranged at the four corners of a rectangular grating (11) and in that the rotation spindles (10.2) of the feet (10.1) are parallel to the plane of the grating.

4. Rack according to claim 2 or 3, characterised in that it comprises means for locking the feet (10.1) in two perpendicular positions, a first upright position corresponding to the aerated condition of the stack of racks and a second flat, folded or retracted position corresponding to a compact condition for the stack of racks (9).

5. Rack according to any one of the preceding claims, characterised in that it comprises a frame (12) and feet (10.1) made of plastic, notably injection moulded polypropylene, and a grating (11) and rotation spindles (10.2) made of stainless steel.

6. Rack according to any one of the preceding claims, characterised in that the means (10) for varying the height h between the gratings (11) of two successive racks (10) comprise feet forming substantially rectangular cuboids ending in a first peg (10.3), in that the base of each foot (10.1) has a second peg (10.2) at right angles to the first peg (10.3) and in that the rack (9), notably a frame (12) is provided with indentations for accommodating said pegs (10.3, 10.4).

7. Rack according to any one of claims 2 to 5, characterised in that it comprises a rectangular grating (11) having, at each of its four corners, a foot comprising a first point (19) along a first axis and a second point (20) along a second axis at right angles to said first axis, and in that cavities (21, 22) of complementary shapes are provided opposite said points (19, 20).

8. Rack according to any one of claims 2 to 5, characterised in that it comprises feet (6') for forming a stack of racks (9) superimposed with a spacing h between the gratings of two consecutive racks which is less than or equal to the thickness of the cheeses (8) corresponding to the compact condition and in that it further comprises rotatably mounted spacers (10) for receiving, in the aerated condition, said feet (6') of the next rack and for increasing the distance between the gratings (11) of two successive racks (9).

9. Rack according to any one of the preceding claims, characterised in that it comprises a grating (11) of stainless steel wire comprising a rectangular frame (16) which has, on each of its sides, wires (17) supporting the cheeses (8).

10. Apparatus for turning a stack of racks,
characterised in that it comprises:
- means (25) for gripping a stack of racks (9) according to any one of the preceding claims in the aerated condition, bearing cheeses (8), the stack being surmounted by an empty rack (9);
- means for moving the stack of racks (9) into the compact condition in which the gratings (11) of two successive racks (11) ensure that the cheeses (8) are held in place;
- means (26) for turning over the stack of racks (9) in the compact condition;
- means for moving the racks (9) into the aerated condition;
- means for setting down the stack of racks which have been turned over onto its support feet.

11. Apparatus according to claim 10, characterised in that the turning means (26) comprise a rotating ring mounted on motorised rollers (27) and in that the gripping means (25) comprise two jacks (25.2) arranged facing one another and diametrically opposite one another on the ring (26).

12. Process for producing cheese, comprising a step for maturing the cheeses placed on racks (9) with a turning cycle for the cheeses (8), characterised in that the cheeses are arranged on racks (9) according to any one of claims 1 to 9.

13. Process according to claim 12, characterised in that the turning device according to claim 10 or 11 is used to turn over the stacks of racks (9).
